Europäisches Patentamt

European Patent Office

Office européen des brevets

(11) Publication number: **0 059 072**
A1

# EUROPEAN PATENT APPLICATION

(21) Application number: 82300824.8

(22) Date of filing: 18.02.82

(51) Int. Cl.³: **F 02 B 41/00,** F 01 N 3/30,
F 02 B 29/00

(30) Priority: 24.02.81 GB 8105704

(71) Applicant: **Harkness, Robert McCulloch, 4 Lothian
Street, Rosewell Midlothian EH24 9BD Scotland (GB)**
Applicant: **Halliday, James Fairgrieve, 8 Salters Terrace
Woodburn, Dalkeith Midlothian EH22 2DP Scotland (GB)**

(43) Date of publication of application: 01.09.82
**Bulletin 82/35**

(72) Inventor: **Harkness, Robert McCulloch, 4 Lothian Street,
Rosewell Midlothian EH24 9BD Scotland (GB)**
Inventor: **Halliday, James Fairgrieve, 8 Salters Terrace
Woodburn, Dalkeith Midlothian EH22 2DP Scotland (GB)**

(74) Representative: **McCallum, William Potter et al,
Cruikshank & Fairweather 19 Royal Exchange Square,
Glasgow G1 3AE Scotland (GB)**

(84) Designated Contracting States: **BE DE FR GB IT SE**

(54) **Combustion rectifier.**

(57) A method and apparatus for improving the performance of an internal combustion engine comprising injecting additional combustion air into each cylinder of the engine at predetermined intervals.

EP 0 059 072 A1

- 1 -

COMBUSTION RECTIFIER

The present invention relates to internal combustion engines.

In an internal combustion (I.C.) engine, power is obtained from the ignition of a fuel/air mixture, and the working cycle comprises a suction or induction stage wherein the air/fuel mixture or air (for a compression ignition or fuel injection engine) is drawn into a working chamber of the engine; a compression stage wherein the mixture is compressed by a piston member; an ignition power stage wherein the mixture is ignited (fuel being injected at the beginning of this stage for the compression ignition or fuel injection engine) to cause power motion of the piston member, and an exhaust stage wherein spent combustion gases are expelled from the working chamber. I.C. engines are most commonly of the four-stroke reciprocating piston-cylinder type wherein the abovementioned stages are constituted by four successive strokes of the piston, valve gear including inlet and exhaust valves being provided to control the flow of fuel mixture and burnt gases to and from the cylinder.

It is an object of the present invention to provide an improved internal combustion engine.

According to one aspect of the present invention there is provided an air valve for an internal combustion engine, comprising a valve body, a passage in said body, valve means which normally close said passage to prevent egress of spent combustion products therefrom but is opened on creation of a pressure drop within the engine to permit air to flow through said passage into the engine.

According to a further aspect of the present invention, there is provided an internal combustion engine comprising at least one cylinder, inlet valve means for admitting a fuel/air mixture to each chamber for ignition therein, exhaust valve means for exhausting spent combustion products from the cylinder to an exhaust system, and at least one

- 2 -

air valve located in said exhaust system, said air valve being adapted to prevent egress of spent combustion products therefrom and to permit passage of air into said cylinder when a reduction of pressure occurs therein.

According to yet another aspect of the present invention, there is provided a method of improving the performance of an internal combustion engine comprising injecting additional combustion air into each cylinder of the engine at predetermined intervals.

In the four-stroke I.C. engine, it is customary for the inlet and exhaust valves to both be open for a short overlap period of the suction and exhaust stages so that the exhaust duct will be subject to vacuum conditions: preferably the suction effect created by this vacuum serves to draw the additional air into the working chamber or cylinder from the exhaust duct. It is contended that this additional air promotes improvements in the operation of the engine.

An air filter is preferably positioned in the path of air flowing to the valve device via the inlet.

An embodiment of the present invention will now be described, by way of example, with reference to the accompanying drawings in which:-

Fig. 1 is a perspective view of an air valve for an internal combustion engine in accordance with the present invention.

Fig. 2 is a sectional view on the line 2-2 of Fig. 1 to an enlarged scale.

Fig. 3 is an exploded perspective view of the air valve,

Fig. 4 is a top plan view of the valve seat incorporated in the air valve.

Fig. 5 is an underneath plan view of the valve seat of Fig. 4,

Fig. 6 is a sectional view on the line 6-6 of Fig. 4 and

Fig. 7 is a perspective view to an enlarged scale of a baffle incorporated in the air valve.

Fig. 8 is a general view of an internal combustion engine illustrating the air valve of the present invention mounted in the exhaust of the engine.

Referring to the drawings, an air valve 9 for incorporation in the exhaust manifold of an internal combustion engine comprises a tubular body 10 of plated mild steel which is provided on its exterior surface with integral ribs 11 which serve to provide an extended external surface area which facilitates cooling of the valve.

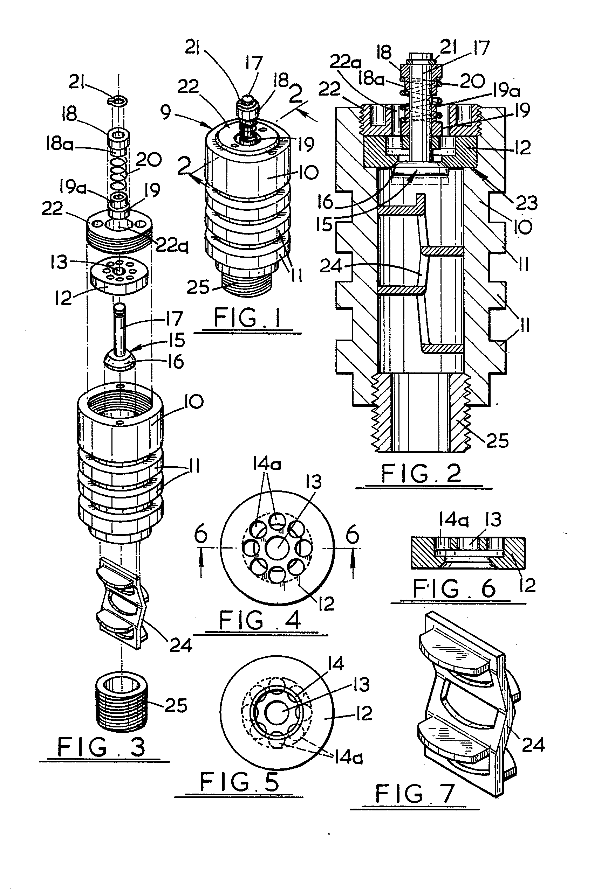

Within the valve body 10 is located an annular valve seat element 12, having a central bore 13 provided with a stainless steel valve seat 14 (Fig. 5) at its lower end. A plurality of holes 14a extend through the upper face of the valve seat element 12 and interconnect with the central bore 13. A check valve 15 of stainless steel having a conical sealing surface 16 co-operates with the valve seat 14, the valve 15 having an upwardly projecting spindle 17 which extends through the bore 13 beyond the body 10.

Above the valve seat element 12, a pair of spacers 18, 19 e.g. of stainless steel or ceramic surround the spindle 17 and serve to locate therebetween a spring 20 made of stainless steel in order to withstand the heat to which the valve is subjected. The action of the spring 20 tends to maintain the valve 15 in sealing engagement with the valve seat 14 when the engine is stopped. In an alternative arrangement the spacer 19 can be formed integral with the valve seat element 12.

A washer 21 retains the spacers 18, 19 and the spring 20 on the spindle 17 after riveting over the free end of the spindle 17 and a closure ring 22 having an enlarged central bore 22a can be screwed into engagement with an internally screw-threaded bore in the top of the body 10 in order to retain the valve seat element 12 in said body against a shoulder 23 (Fig. 2) formed internally of the body.

Within the tubular body 10 and below the valve seat element 12 and valve 15 is provided a barrier in the form of a baffle 24 which provides a labyrinth path serving to impede the flow of spent combustion products into contact with the valve seat element 12 and valve 15. The baffle may or may not be used depending on the type of fuel used. A screw-threaded coupling 25 engages integral with the lower end of the valve body 10 projects therefrom in order to allow the valve body 10 to be screwed into a hole in the exhaust manifold or exhaust duct of an internal combustion engine.

It will be noted that the spacers 18, 19 have integral extensions 18a, 19a within the spring 20 and extending axially along the spindle 17 towards each other. These extensions 18a, 19a limit the downward extent of travel of the valve 15 and its associated spindle 17 against the action of spring 20. Consequently the time required for the check valve 15 to close after having reached its fully open position is restricted. If desired, means can be provided for varying the spring tension to enable accurate control of the time and extent of opening of the valve 15.

In use, a single air valve as described above can be fitted into a common exhaust manifold serving a plurality of cylinders of the engine. Alternatively a plurality of air valves can be employed, one being associated with the exhaust duct from each cylinder.

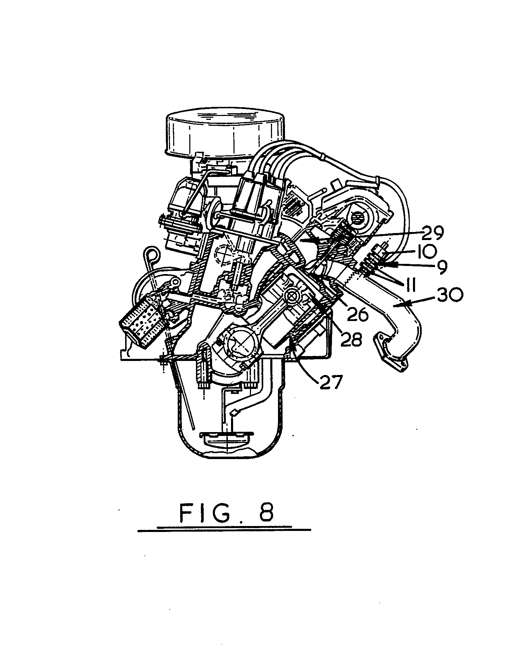

Fig. 8 of the drawings illustrates generally an internal combustion engine for use in a motor car or commercial vehicle and is of the reciprocating four-stroke multicylinder type. As previously indicated, the working cycle of this engine type comprises suction, compression, ignition and exhaust stages and entry of the fuel/air mixture and discharge of burnt combustion gases is controlled in known manner by valve gear 26 including an inlet valve and an exhaust valve per cylinder 27. The fuel/air mixture is drawn into each cylinder working chamber 28 from a carburettor via an inlet manifold 29 while combustion exhaust gas is expelled to an exhaust manifold 30 connected to the customary exhaust pipe and silencing system (not shown) of the vehicle. It is a characteristic of the normal engine that there is an overlap of the exhaust and suction stages i.e. the associated inlet and exhaust valves of a cylinder will be open simultaneously for a short period: this overlap is provided to ensure a maximum supply of fuel mixture to the working chamber while as much as possible of the spent combustion gas is exhausted from the chamber, i.e. the suction and exhaust stages should be as large as practically possible and the overlap can be as much as $20^{\circ}$ to $45^{\circ}$ of crankshaft rotation.

In an internal combustion engine in accordance with the present invention and as illustrated in Fig. 8, an air valve or air valves 9 as described above are fitted into communication with the exhaust manifold. Preferably an air valve 9 is fitted close to the exhaust valve of each cylinder. The provision of an air valve or valves associated with the exhaust manifold in the manner described results in additional air being supplied to the working chamber 28 by injection through the exhaust manifold 30, this additional air being drawn into the chamber 28 from the exhaust manifold 30 during the abovementioned overlap.

In operation of the engine and specifically during the exhaust stage, pulsating pressure conditions exist in the exhaust manifold 30 adjacent each cylinder 27. Pressure is greatest with the inlet valve closed and can amount to 40 p.s.i. or more and this pressure promotes velocity discharge of gases via the exhaust pipe. During this pressure period, the engine operates conventionally and the check valve 15 prevents discharge of exhaust gases via its air valve 9. However during the overlap period when the exhaust valve has not quite closed and the inlet valve has started to open there is a direct connection between the exhaust manifold 30 and the inlet manifold 29. At this stage a vacuum will be created in the working chamber 28 and air will be drawn into the chamber via the air valve 9 and the exhaust manifold 30. The effect of this additional air is to dilute the exhaust gases and cause a form of air oxidation. Therefore by diluting the contents of the exhaust manifold with clean air, a substantial proportion of the air is drawn into the cylinders 27 from the manifold 30 one at a time in the same sequence as the engine firing order.

It is contended that this additional air supply will provide a more efficient air/fuel mixture and will result in reduced fuel consumption. Tests carried out on a motor vehicle using the system of the present invention suggest that a reduction in fuel consumption of the order of 25% can be achieved. The system in effect operates as a form of combustion rectifier. It is also believed that formation of corrosive combustion products will be reduced, particularly for short-run vehicle use, as will the formation of carbon and sludge deposits in the engine. Additionally, it is contended that a "cleaner" exhaust will result, and this is important since in the interests of avoiding a health hazard there are now severe regulations concerning excessively dirty exhausts from vehicles. In this connection, tests have shown that the carbon monoxide content of the exhaust gases from a vehicle using the invention can be reduced from 5.5% to around 3.5%. The air valve members can also be used in diesel (compression ignition) engines, and these members have been found to considerably reduce the smoke in diesel engine exhausts, with more efficient combustion of fuel and more power. It has also been observed that the fuel injection nozzles of the diesel engine have been relatively cleaner after prolonged use.

To provide optimum results with the present invention adjustment of some of the normal engine settings will probably be necessary.   For example, the ignition timing may require advancing for example by $5^\circ - 10^\circ$, and the carburettor should be adjusted to provide a leaner mixture.

The air valve body and other parts may be made for example by investment casting.

Modifications are of course possible in the arrangement.   For example, it would be possible to provide a separate slightly pressurised air supply to the air valves although this has the disadvantage of increasing the cost of the installation.

It will be readily apparent that the present invention can be applied to various types of internal combustion engines e.g. vehicle engines, marine engines or industrial engines.   In particular it can be applied to diesel engines utilising compression ignition, engines utilising spark ignition or engines incorporating fuel injection systems.

In tests carried out on motor vehicles incorporating an air valve as described above, the performance of the engine of the tested vehicles has been improved.   For example, whereas previously a driver may have been required to use a plurality of gears in order to climb an incline, he may be able to climb that same incline in top gear when the inventive method is used.

It has been found satisfactory to mount the necessary air valve in the exhaust system but it is conceivable that the valve could be mounted in another location in the engine.   For example, it might be mounted on the cylinder block so long as additional air is admitted to the cylinder at the appropriate time.   If desirable, the air could be pumped or injected into the cylinder with a suitable timing mechanism.

It will be readily appreciated that an air valve used in the present invention can be of a different form to that shown in the drawings.   The embodiment shown in the drawings however has been found in practice to be suitable.

0059072

- 8 -

It has been found that the nearer the air valve is positioned to its associated cylinder or cylinders in the exhaust or outlet from said cylinder or cylinders, the more satisfactory the results which are achieved in the performance of the engine with consequent savings in fuel consumption and reduced levels of exhaust pollution.

CLAIMS:

1. An air valve for an internal combustion engine, characterised in that said valve comprises a valve body (10), a passage (13) in said body, valve means (14,15) which normally close said passage to prevent egress of spent combustion products therefrom but is opened on creation of a pressure drop within the engine to permit air to flow through said passage into the engine.

2. An air valve as claimed in claim 1, in which the valve means (14, 15) comprises a valve seat (14) provided in said passage and a valve member (15) displaceable from said valve seat (14) on reduction in pressure in the engine side of the passage.

3. An air valve as claimed in claim 2, in which the valve member (15) is biassed against displacement from the valve seat (14), limiting means (18,19) being provided for controlling the amount of displacement of the valve member (15) from the valve seat (14).

4. An air valve as claimed in claim 3, in which the valve member (15) has a spindle (17) integral therewith, a first fixed spacer means (19) and a second movable spacer means (18) surrounding said spindle, a spring (20) extending between said first and second spacer means, said first and second spacer means having surfaces adapted to be brought into contact with each other to limit the displacement of the valve member (15) from the valve seat (14).

5. An air valve as claimed in any preceding claim in which a barrier is provided in the passage (13) of the air valve, said barrier being adapted to impede the flow of spent combustion products into contact with the valve means (14,15) from an engine when the valve is fitted thereto.

6.   An air valve as claimed in claim 5, in which the barrier comprises a baffle (24) providing a labyrinth flow passage for said spent combustion products.

7.   An internal combustion engine comprising at least one cylinder (27), inlet valve means for admitting a fuel/air mixture to each chamber (28) for ignition therein, exhaust valve means for exhausting spent combustion products from the cylinder (27) to an exhaust system, and characterised in that at least one air valve (9) is located in said exhaust system, said air valve being adapted to prevent egress of spent combustion products therefrom and to permit passage of air into said cylinder (27) when a reduction of pressure occurs therein.

8.   An internal combustion engine as claimed in claim 7, in which the air valve (9) comprises a valve body (10), a passage (13) in said body, valve means (14,15) which normally closes said passage to prevent egress of spent combustion products therefrom and which opens to permit air to flow through said passage into the cylinder (27) when a reduction in pressure occurs therein.

9.   An internal combustion engine as claimed in claim 8, in which the valve means comprises a valve seat (14) provided in said passage (13) and a valve member (15) displaceable from said valve seat (14) on reduction of pressure in the cylinder (27).

10.   An internal combustion engine as claimed in claim 9, in which the valve member (15) is biassed against displacement from the valve seat (14), limiting means (18,19) being provided for controlling the amount of displacement of the valve member (15) from the valve seat (14).

11.   An internal combustion engine as claimed in claim 10, in which the valve member (15) has a spindle (17) integral therewith, first fixed spacer means (19) and second movable spacer means (18) surrounding said spindle, a spring (20) extending between said first and second spacer means, said first and second spacer means having surfaces adapted to be brought into contact with each other to limit the displacement of the valve member (15) from the valve seat (14).

12. An internal combustion engine as claimed in any of claims 8 to 11, in which a barrier is provided in the passage (13) of the air valve, said barrier being adapted to impede the flow of spent combustion products from the cylinder into contact with the valve means (14,15).

13. An internal combustion engine as claimed in claim 12, in which the barrier comprises a baffle (24) providing a labyrinth flow passage for said spent combustion products.

14. A method of improving the performance of an internal combustion engine comprising injecting additional combustion air into each cylinder (27) of the engine at predetermined intervals.

15. A method as claimed in claim 14, in which the additional combustion air is injected automatically into each cylinder (27) on reduction of pressure within said cylinder.

16. A method as claimed in claim 14 or 15, in which said additional air is introduced into each cylinder (27) through the exhaust system therefrom.

0059072

FIG. 1

FIG. 2

FIG. 3

FIG. 4

FIG. 5

FIG. 6

FIG. 7

FIG. 8

0059072

# EUROPEAN SEARCH REPORT

Application number

EP 82 30 0824

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X,Y | US-A-3 253 401 (WELLS) *Column 1, lines 7-14; line 39 to column 2, line 44; figures 1-3* | 1-16 | F 02 B 41/00 F 01 N 3/30 F 02 B 29/00 |
| Y | DE-C- 204 259 (TURICUM) *Page 1, lines 25-38; figure 1* | 3,4,10 ,11 | |
| A | FR-A- 732 162 (COINARD) *Page 4, lines 81-93; figure 1* | 1,2,14 ,15 | |

TECHNICAL FIELDS SEARCHED (Int. Cl. 3)

F 02 B
F 01 N

The present search report has been drawn up for all claims

| Place of search | Date of completion of the search | Examiner |
|---|---|---|
| THE HAGUE | 28-04-1982 | KOOIJMAN F.G.M. |